# FASCICULE DE BREVET EUROPEEN

(11) **EP 2 704 897 B1**
(45) Date de publication et mention de la délivrance du brevet: **21.10.2015**
(21) Numéro de dépôt: 12725083.5
(22) Date de dépôt: 02.05.2012
(51) Int. Cl.: B29C 70/48, B29C 45/00

(54) **PROCÉDÉ DE MOULAGE PAR INJECTION D'UNE PIÈCE EN MATÉRIAU COMPOSITE**
VERFAHREN ZUM SPRITZGIESSEN EINES VERBUNDTEILS
PROCESS FOR INJECTION MOULDING A COMPOSITE PART

(30) Priorité: 06.05.2011 FR 1153929
(43) Date de publication de la demande: 12.03.2014
(73) Titulaire: SNECMA, 75015 Paris (FR)
(72) Inventeur: GODON, Thierry, F-77550 Moissy Cramayel Cedex (FR); DAMBRINE, Bruno, Jacques, Gérard, F-77550 Moissy Cramayel Cedex (FR); RUIZ, Eduardo, F-77550 Moissy Cramayel Cedex (FR); TROCHU, François, F-77550 Moissy Cramayel Cedex (FR)
(74) Mandataire: Robert, Mathias
(86) Numéro de dépôt international: PCT/FR2012/050973
(87) Numéro de publication internationale: WO 2012/153035

(56) Documents cités:
- WO-A1-2011/027074
- DE-A1-102009 039 116
- FR-A1- 2 940 173
- FR-A1- 2 950 286

## Description

La présente invention concerne un procédé de moulage par injection d'une pièce en matériau composite, en particulier dans le domaine aéronautique.

Un tel procédé consiste généralement à placer dans un moule une préforme réalisée par exemple par tissage en trois dimensions de fils, à injecter une résine dans le moule de manière à imprégner la préforme, puis à démouler la pièce après réticulation de la résine. Un tel procédé est connu sous le nom de RTM (Resin Transfer Moulding).

La demande de brevet FR 2 950 286, au nom de la Demanderesse, divulgue un procédé de type RTM pour la fabrication d'une aube en matériau composite, consistant à :
- réaliser par tissage de fils en trois dimensions une préforme comprenant une partie de pied et une partie de pale, reliées par des faces latérales obliques destinées à former des portées d'appui du pied dans un alvéole de montage d'un disque de rotor,
- compacter la préforme dans un moule dont l'empreinte comporte des premières faces latérales obliques correspondant aux faces latérales précitées de la préforme, et des secondes faces obliques, venant en appui contre la partie de pied de la préforme, et qui ont une inclinaison opposée à celle des premières faces latérales obliques,
- injecter une résine sous vide dans le moule et polymériser la résine.

La préforme fibreuse est ainsi noyée dans une matrice rigide en résine, les fibres de la préforme ayant une fonction de renfort mécanique et la matrice en résine assurant la tenue de la pièce.

En fonction des paramètres d'injection et du type de résine utilisée, des porosités peuvent apparaître dans la pièce injectée, au coeur de celle-ci et/ou en surface. Ces porosités fragilisent considérablement la pièce, qui doit alors être mise au rebus.

Des études ont montré que ces porosités ont pour origine un composé chimique généré lors de la réticulation de la résine et qui, aux conditions de température et de pression à l'intérieur du moule, est présent sous forme gazeuse.

Ce gaz créé des bulles emprisonnées dans la préforme ,et dans la résine qui, en durcissant lors de la réticulation, comporte des porosités.

Le document DE 10 2009 039 116 A1 divulgue un procédé de moulage par injection d'une pièce composite selon le préambule de la revendication 1.

L'invention a notamment pour but d'apporter une solution simple, efficace et économique à ce problème.

A cet effet, elle propose un procédé de moulage par injection d'une pièce en matériau composite, selon la revendication 1.

L'application d'une pression à l'intérieur du moule pendant la réticulation permet d'éviter l'apparition de bulles de gaz dans la résine et, ainsi, d'éviter que la pièce injectée ne comporte des porosités.

Selon une caractéristique de l'invention, la pression est appliquée à la pièce dans le moule avant que le degré de réticulation de la résine ne dépasse une valeur, dite critique, comprise entre 20 et 30 %.

On applique avantageusement ainsi la pression à la pièce avant le dégagement de bulles de gaz dans la pièce. En outre, la résine est encore suffisamment fluide à ce moment pour que l'ensemble du volume interne du moule soit soumis de façon homogène à une pression suffisamment élevée pour empêcher la formation de bulles.

Avantageusement, la pression appliquée à la pièce dans le moule est supérieure à la pression de vapeur d'un gaz généré lors de la réticulation de la résine.

Ceci permet de garantir qu'aucune bulle de gaz ne sera formée lors de la réticulation de la résine.

La pression appliquée à la pièce est par exemple supérieure ou égale à 2.10⁵ Pascals (2 bars), en valeur relative, c'est-à-dire par rapport à la pression atmosphérique.

A titre d'exemple, la résine peut être une résine époxyde, une résine bismaléimide, une résine polyimide ou toute résine comportant des solvants et/ou des impuretés volatiles.

Conformément à l'invention, la pression est appliquée à la pièce par injection d'un fluide sous pression dans le moule, par exemple par injection d'un gaz, tel que de l'air ou de l'azote, ou d'un liquide non miscible avec la résine.

De préférence, le fluide sous pression est injecté dans le moule en plusieurs points distincts, ce qui permet de s'assurer que la pression est suffisamment homogène à l'intérieur du moule. L'injection multipoints permet également de réduire le temps d'injection.

En effet, lorsque la pièce est volumineuse et nécessite beaucoup de matière, le temps d'injection de la résine est augmenté. La réticulation de la résine à l'issue de l'injection complète peut être déjà trop avancée, ce qui signifie que la résine est alors trop visqueuse ou rigide pour permettre une répartition uniforme de la pression et donc pour empêcher la formation de porosités.

Il est donc préférable dans ce cas de procéder par injection multipoints, de manière à réduire le temps d'injection. Le circuit d'injection de résine peut être différent ou identique au circuit de la mise sous pression.

En effet, il est important que tout point de la pièce soit soumis à la pression nécessaire pour éviter la formation de bulles de gaz.

Dans une autre forme de réalisation, la préforme et la résine sont comprimées dans le moule par au moins un vérin.

En variante, un élément apte à se dilater est inséré dans le moule, le moule étant soumis à une élévation de température lors du moulage par injection de la pièce de façon que l'élément précité soumette la résine et la préforme à une pression pendant la réticulation de la résine.

Cet élément est par exemple une cale en silicone, en cuivre ou en aluminium.

Avantageusement, le moule est mis sous vide pour l'injection de la résine, ce qui permet de réduire les temps d'injection et d'améliorer la qualité de la pièce finie.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est vue en perspective d'une aube de turbomachine en matériau composite sur laquelle sont représentés des points d'injection de matière et de fluide sous pression ;
- la figure 2 est une vue partielle en coupe relative à une variante de réalisation, dans laquelle la préforme et la résine sont comprimées dans un moule par un vérin ;
- la figure 3 est une vue partielle en coupe relative à une autre variante de réalisation, dans laquelle la préforme et la résine sont comprimées dans le moule par un élément apte à se dilater lors du moulage.

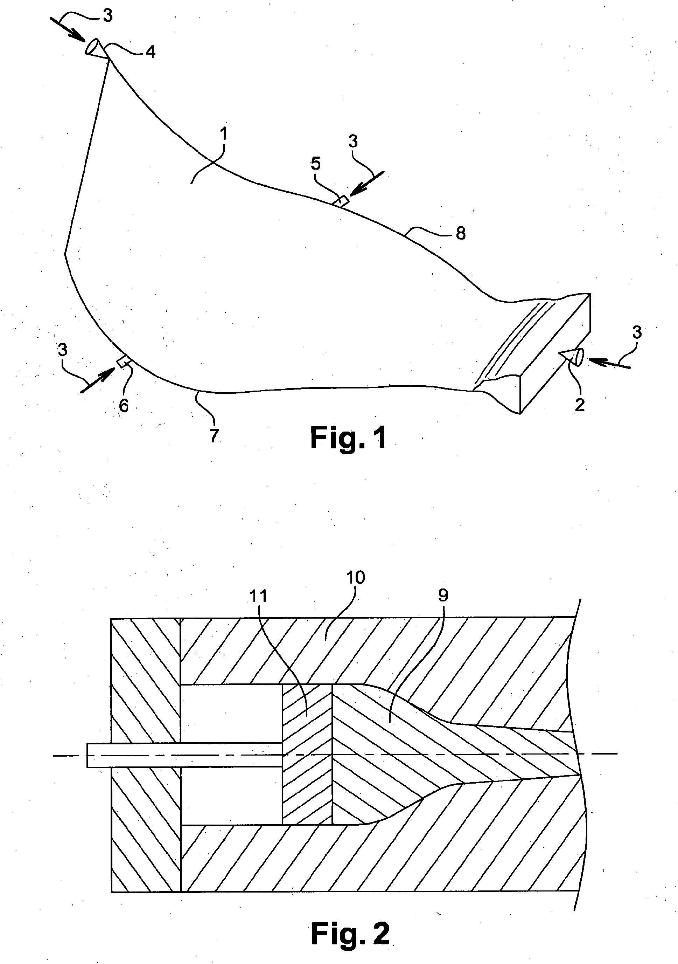

Une première forme de réalisation d'un procédé de moulage par injection d'une aube de turbomachine en matériau composite est décrite ci-après en référence à la figure 1.

Le procédé consiste tout d'abord à placer une préforme d'une aube dans un moule. La préforme peut être réalisée par tissage de fils en deux ou trois dimensions.

De la résine est ensuite injectée dans le moule en au moins un point 2 représenté schématiquement à la figure 1, de manière à imprégner la préforme, le moule étant mis de préférence sous vide lors de cette injection. Un tel procédé est connu sous le nom de VARTM ("Vacuum Assisted Resin Transfer Moulding"). La résine utilisée est par exemple une résine époxyde, par exemple du type connu sous la référence PR520N, une résine bismaléimide, une résine polyimide ou toute résine comportant des solvants et/ou des impuretés volatiles.

A titre d'exemple, la pression de la résine lors de l'injection est de l'ordre de 1 à 2 bars et la température est de l'ordre de 150 à 200°C. La durée de l'injection est de l'ordre de quelques minutes, par exemple30 minutes au maximum.

Lors de la réticulation de la résine à l'intérieur du moule, un composé chimique sous forme gazeuse peut être formé dans la résine, ou être déjà présent dans celle-ci.

Afin d'éviter la formation de bulles de gaz dans la pièce, un gaz sous pression est injecté dans le moule, à la fin du remplissage par la résine, en un ou plusieurs points distincts, représentés schématiquement par des flèches 3 à la figure 1. Le gaz est de préférence injecté à une pression supérieure à la pression atmosphérique. Le gaz sous pression est par exemple de l'air ou de l'azote à une pression entre 3 à 5 bars. Le fluide sous pression peut également être un liquide non miscible avec la résine, par exemple de l'huile.

Cette injection de fluide sous pression est préférentiellement réalisée le plus tôt possible après l'injection de résine, de façon à ce que la pression soit appliquée à la pièce dans le moule avant que le degré de réticulation de la résine ne dépasse une valeur, dite critique, comprise entre 20 et 30 %. Cette valeur critique peut varier en fonction de la nature de la résine et des fibres.

En dessous de ce seuil, la résine est suffisamment fluide pour que la résine et la préforme soient soumises uniformément à la pression, de façon à garantir l'absence de porosité en tout point de la pièce.

La température et la pression du gaz sont maintenues jusqu'à la réticulation complète de la résine, de façon à réaliser une aube composite dépourvue de porosités et comportant une préforme fibreuse noyée dans une matrice rigide en résine. La pièce peut ensuite être démoulée.

Le moule d'injection (non visible en figure 1) comporte classiquement au moins un trou d'injection de résine 2 et un trou d'évent 4. Ces trous 3, 4 peuvent être utilisés pour injecter le gaz sous pression. D'autres points d'injection 5, 6 de gaz sous pression peuvent être prévus, par exemple au niveau du bord d'attaque 7 et du bord de fuite 8 de l'aube 1.

Les points 3 d'injection de gaz peuvent également être tous séparés du point d'injection de résine 2 et du trou d'évent 4. De cette manière, il est possible de réaliser d'abord l'injection de résine à un poste de travail puis, séparément, l'injection de gaz sous pression à un autre poste de travail, de manière à ne pas immobiliser trop longtemps le poste d'injection de résine d'une chaîne de fabrication. Cela évite également que les points 3 d'injection de gaz sous pression puissent être obstrués par des bouchons dus à la gélification de la résine au niveau d'un point d'injection 2.

Le procédé peut également comporter plusieurs phases successives d'injection de résine dans le moule et de mise sous pression de la résine et du moule, en particulier dans le cas du moulage de pièces volumineuses.

La figure 2 illustre une variante dans laquelle le procédé de moulage de l'aube consiste à placer une préforme 9 dans un moule 10, injecter une résine dans le moule de manière à imprégner la préforme 9, comprimer la préforme et la résine dans le moule à l'aide d'un vérin 11, et démouler l'aube après réticulation de la résine.

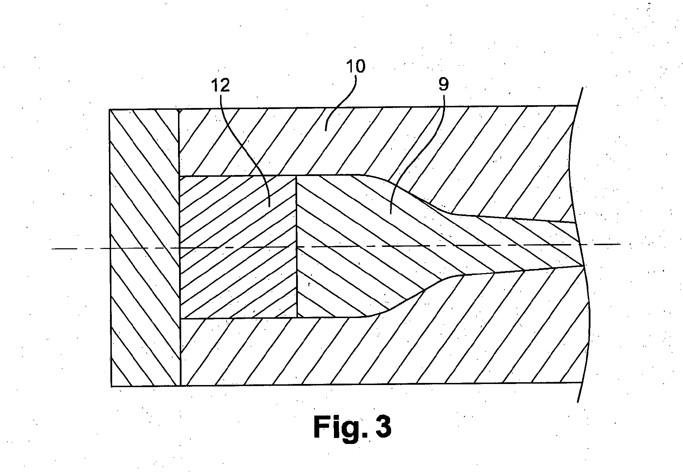

La figure 3 illustre encore une autre variante de réalisation dans laquelle un élément 12 apte à se dilater est placé avec la préforme 9 dans le moule 10. Après injection de la résine dans le moule 10, la résine, la préforme et l'élément sont chauffés de sorte que cet élément 12 se dilate et exerce une pression sur la résine et la préforme 9. La pièce est démoulée après réticulation de la résine.

L'élément 12 est par exemple une cale en silicone, en cuivre ou en aluminium.

Dans les cas des figures 2 et 3, le principe est similaire à celui exposé en référence à la figure 1, en ce que la résine et la préforme sont soumises à une pression suffisante pour éviter la formation de bulles de gaz lors de la réticulation de la résine.

## Revendications

1. Procédé de moulage par injection d'une pièce (1) en matériau composite, consistant à placer une préforme (9) dans un moule (10), injecter une résine dans le moule (10) de manière à imprégner la préforme (9), et démouler la pièce (1) après réticulation de la résine, consistant également à soumettre la résine et la préforme (9) à une pression dans le moule (10) pendant la réticulation de la résine, **caractérisé en ce que** que la pression est appliquée à la pièce (1) par injection d'un fluide sous pression dans la cavité du moule, par exemple par injection d'un gaz tel que de l'air ou de l'azote, ou d'un liquide non miscible avec la résine.

2. Procédé de moulage selon la revendication 1, **caractérisé en ce que** la pression est appliquée à la pièce (1) dans le moule (10) avant que le degré de réticulation de la résine ne dépasse une valeur comprise entre 20 et 30 %.

3. Procédé de moulage selon la revendication 1 ou 2, **caractérisé en ce que** la pression appliquée à la pièce (1) dans le moule (10) est supérieure à la pression de vapeur d'un gaz généré lors de la réticulation de la résine.

4. Procédé de moulage selon l'une des revendications 1 à 3, **caractérisé en ce que** la pression appliquée à la pièce (1) est supérieure ou égale à 2.10⁵ Pascals (2 bars), par rapport à la pression atmosphérique.

5. Procédé de moulage selon l'une des revendications 1 à 4, **caractérisé en ce que** la résine est une résine époxyde, une résine bismaléimide, une résine polyimide ou toute résine comportant des solvants et/ou des impuretés volatiles.

6. Procédé de moulage selon l'une des revendications 1 à 5, **caractérisé en ce que** le fluide sous pression est injecté dans le moule en plusieurs points distincts (3).

7. Procédé de moulage selon l'une des revendications 1 à 6, **caractérisé en ce que** le moule (10) est mis sous vide pour l'injection de la résine.

8. Procédé de moulage selon l'une des revendications 1 à 7, **caractérisé en ce qu'**il comporte plusieurs phases successives d'injection de résine dans le moule et de mise sous pression de la résine et du moule.

## Patentansprüche

1. Verfahren zum Spritzgießen eines Teils (1) aus Verbundmaterial, das darin besteht, einen Vorformling (9) in eine Gießform (10) zu legen, ein Harz in die Gießform (10) so einzuspritzen, dass der Vorformling (9) durchtränkt wird, und das Teil (1) nach Vernetzung des Harzes zu entformen, wobei es auch darin besteht, das Harz und den Vorformling (9) einem Druck in der Gießform (10) während der Vernetzung des Harzes auszusetzen, **dadurch gekennzeichnet, dass** der Druck auf das Teil (1) durch Einspritzen eines Druckmediums in den Hohlraum der Gießform aufgebracht wird, beispielsweise durch Einspritzen eines Gases, wie etwa Luft oder Stickstoff, oder einer mit Harz nicht mischbaren Flüssigkeit.

2. Gießverfahren nach Anspruch 1, **dadurch gekennzeichnet, dass** der Druck auf das Teil (1) in der Gießform (10) aufgebracht wird, bevor der Vernetzungsgrad des Harzes einen Wert zwischen 20 und 30 % überschreitet.

3. Gießverfahren nach Anspruch 1 oder 2, **dadurch gekennzeichnet, dass** der auf das Teil (1) in der Gießform (10) aufgebrachte Druck höher als der Dampfdruck eines bei der Vernetzung des Harzes erzeugten Gases ist.

4. Gießverfahren nach einem der Ansprüche 1 bis 3, **dadurch gekennzeichnet, dass** der auf das Teil (1) aufgebrachte Druck höher oder gleich 2.10⁵ Pascal (2 Bar) bezüglich des Atmosphärendrucks ist.

5. Gießverfahren nach einem der Ansprüche 1 bis 4, **dadurch gekennzeichnet, dass** das Harz ein Epoxidharz, ein Bismaleimidharz, ein Polyimidharz oder jegliches Harz mit Lösungsmitteln und/oder flüchtigen Unreinheiten ist.

6. Gießverfahren nach einem der Ansprüche 1 bis 5, **dadurch gekennzeichnet, dass** das Druckmedium in die Gießform an mehreren verschiedenen Punkten (3) eingespritzt wird.

7. Gießverfahren nach einem der Ansprüche 1 bis 6, **dadurch gekennzeichnet, dass** die Gießform (10) für das Einspritzen von Harz evakuiert wird.

8. Gießform nach einem der Ansprüche 1 bis 7, **dadurch gekennzeichnet, dass** es mehrere aufeinanderfolgende Phasen zum Einspritzen von Harz in die Gießform und zur Druckbeaufschlagung von Harz und Gießform umfasst.

## Claims

1. A method of injection molding a part (1) made of composite material, the method consisting in placing a preform (9) in a mold (10), in injecting a resin into the mold (10) so as to impregnate the preform (9), and in unmolding the part (1) after curing the resin, consisting also in subjecting the resin and the preform (9) to pressure inside the mold (10) while the resin is curing, **characterized in that** the pressure is applied to the part (1) by injecting a fluid under pressure into the cavity of the mold, e.g. by injecting a gas such as air or nitrogen, or a liquid that is not miscible with the resin.

2. A molding method according to claim 1, **characterized in that** the pressure is applied to the part (1) in the mold (10) before the degree of curing of the resin exceeds a value lying in the range 20% to 30%.

3. A molding method according to claim 1 or claim 2, **characterized in that** the pressure applied to the part (1) in the mold (10) is higher than the vapor pressure of a gas generated during curing of the resin.

4. A molding method according to any one of claims 1 to 3, **characterized in that** the pressure applied to the part (1) is greater than or equal to 2.10⁵ Pascals (2 bars), relative to atmospheric pressure.

5. A molding method according to any one of claims 1 to 4, **characterized in that** the resin is an epoxy resin, a bismaleimide resin, a polyimide resin, or any resin including volatile impurities and/or solvents.

6. A molding method according to any one of claims 1 to 5, **characterized in that** the fluid under pressure is injected into the mold via a plurality of distinct points (3).

7. A molding method according to any one of claims 1 to 6, **characterized in that** the mold (10) is evacuated in order to inject the resin.

8. A molding method according to any one of claims 1 to 7, **characterized in that** it includes a plurality of successive stages of injecting resin into the mold and of pressurizing the resin and of the mold.
